(19) Europäisches Patentamt / European Patent Office / Office européen des brevets

(11) **EP 1 424 789 B1**

(12) **EUROPEAN PATENT SPECIFICATION**

(45) Date of publication and mention
of the grant of the patent:
**04.07.2007 Bulletin 2007/27**

(51) Int Cl.:
*H04B 7/06* (2006.01)      *H04L 27/26* (2006.01)

(21) Application number: **03027287.6**

(22) Date of filing: **28.11.2003**

(54) **Apparatus and method for generating preamble sequence in an OFDM communication system**

Vorrichtung und Verfahren zur Erzeugung von Präamblesequenzen in einem OFDM-Kommunikationssystem

Dispositif et procédé de génération de séquences de préambules pour système de communication MDFO

(84) Designated Contracting States:
**DE FR GB IT SE**

(30) Priority: **30.11.2002 KR 2002075705**

(43) Date of publication of application:
**02.06.2004 Bulletin 2004/23**

(73) Proprietor: **SAMSUNG ELECTRONICS CO., LTD.
Suwon-City, Kyungki-do (KR)**

(72) Inventors:
• **Suh, Chang-Ho
Paldal-gu
Suwon-city
Kyungki-do (KR)**
• **Chae, Chan-Byoung
Paldal-gu
Suwon-city
Kyungki-do (KR)**

• **Choi, Ho-Kyu
Paldal-gu
Suwon-city
Kyungki-do (KR)**
• **Ro, Jung-Min
Paldal-gu
Suwon-city
Kyungki-do (KR)**
• **Joo, Pan-Yuh
Paldal-gu
Suwon-city
Kyungki-do (KR)**

(74) Representative: **Grünecker, Kinkeldey,
Stockmair & Schwanhäusser
Anwaltssozietät
Maximilianstrasse 58
80538 München (DE)**

(56) References cited:
**EP-A- 1 185 001          WO-A-98/00946
WO-A-03/034642          US-A1- 2002 041 635**

**Description**

The present invention relates generally to an orthogonal frequency division multiplexing (OFDM) communication system, and in particular, to an apparatus and method for generating a preamble sequence in an OFDM communication system.

In general, a wireless communication system supporting a wireless communication service is comprised of Node Bs and user equipments (UEs). The Node B and the UE transmit data by the frame for a wireless communication service. Therefore, the Node B and the UE must acquire mutual synchronization for transmission and reception of the transmission frame, and for the synchronization acquisition, the Node B must transmit a synchronization signal so that the UE can detect the start of a frame transmitted by the Node B. The UE then detects frame timing of the Node B by receiving the synchronization signal Transmitted by the Node B, and demodulates received frames according to the detected frame timing. Generally, a specific preamble sequence previously appointed by the Node B and the UE is used for the synchronization signal.

Preferably, a preamble sequence having a low peak-to-average power ratio (hereinafter referred to as "PAPR") is used for the preamble sequence used in an OFDM communication system. This is because in the OFDM communication system, a high PAPR leads to an increase in power consumption of a radio frequency (RF) amplifier.

A preamble sequence transmitted from a Node B to a UE is created by concatenating a leading preamble sequence S of a long preamble sequence necessary for performing coarse synchronization to a short preamble sequence P necessary for performing fine frequency synchronization. Only the short preamble is used for the preamble transmitted from the UE to the Node B for acquiring fine frequency synchronization.

The OFDM communication system transmits data for several users, or UEs, by time-multiplexing one frame. In the OFDM communication system, a frame preamble indicating start of a frame is transmitted for a predetermined period beginning at a start point of the frame. Since data may be irregularly transmitted to the respective users within one frame, a burst preamble indicting the start of data exists at a front part of each data block. Therefore, a UE must receive a data frame in order to identify a transmission start point of the data. The UE should be synchronized to a start point of data in order to receive the data, and to this end, the UE must acquire a preamble sequence used in common by all systems for synchronization before receiving signals.

The OFDM communication system is identical to a non-OFDM communication system in a source coding scheme, a channel coding scheme and a modulation scheme. While a code division multiple access (CDMA) communication system spreads data before transmission, the OFDM communication system performs inverse fast Fourier transform (hereinafter referred to as "IFFT") on data and then inserts a guard interval in the IFFT-transformed data before transmission. Therefore, compared with the CDMA communication system, the OFDM communication system can transmit a wideband signal with relatively simple hardware. In the OFDM communication system, if a parallel bit/symbol stream generated by parallel converting a plurality of serial bit/symbol streams is applied as a frequency-domain IFFT input after modulation is performed on data, an IFFT-transformed time-domain signal is output. The time-domain output signal is obtained by multiplexing a wideband signal with several narrowband subcarrier signals, and a plurality of modulation symbols are transmitted for one OFDM symbol period through the IFFT process.

However, in the OFDM communication system, if the IFFT-transformed OFDM symbol is transmitted as it is, interference between a previous OFDM symbol and a current OFDM symbol is unavoidable. In order to remove the inter-symbol interference, a guard interval is inserted. The guard interval is so proposed as to insert null data for a predetermined period. However, in a method of transmitting null data for the guard interval, if a receiver incorrectly estimates a start point of an OFDM symbol, interference occurs between subcarriers, causing an increase in error probability of a received OFDM symbol. Therefore, a "cyclic prefix" scheme or a "cyclic postfix" scheme has been proposed for the guard interval. In the former scheme, last 1/n bits in a time-domain OFDM symbol are copied and then inserted in an effective OFDM symbol, and in the latter scheme, first 1/n bits in a time-domain OFDM symbol are copied and then inserted in an effective OFDM symbol.

A receiver may acquire time/frequency synchronization of a received OFDM symbol using a characteristic of the guard interval created by copying a part of one time-domain OFDM symbol, i.e., a beginning part or a last part of one OFDM symbol, and then repeatedly arranging the copied OFDM symbols.

In any radio frequency (RF) system, a transmission signal transmitted by a transmitter is distorted while it passes through a radio channel, and thus, a receiver receives a distorted transmission signal. The receiver acquires time/frequency synchronization of the received distorted transmission signal, using a preamble sequence previously set between the transmitter and the receiver, performs channel estimation, and then demodulates the channel-estimated signal into frequency-domain symbols through fast Fourier transform (hereinafter referred to as "FFT"). After demodulating the channel-estimated signal into frequency-domain symbols, the receiver performs channel decoding and source decoding corresponding to the channel coding applied in the transmitter on the demodulated symbols, to thereby decode the demodulated symbols into information data.

The OFDM communication system uses a preamble sequence for all of frame timing synchronization, frequency synchronization and channel estimation. The OFDM communication system may perform frame timing synchronization, frequency synchronization and channel estimation using a guard interval and a pilot subcarrier in addition to the preamble. The preamble sequence is used to transmit previously known symbols at a beginning part of every frame or data burst, and update estimated time/frequency/channel information at a data transmission part, using information on the guard interval and the pilot subcarrier.

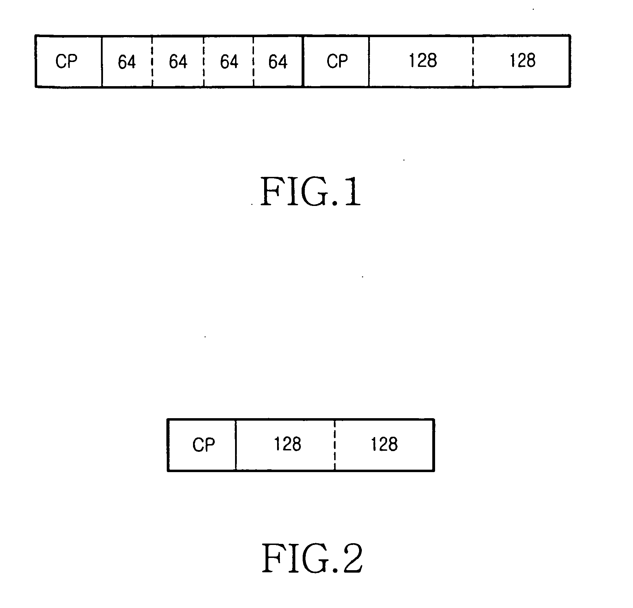

A structure of a preamble sequence used in a common OFDM communication system will now be described with reference to FIGs. 1 and 2.

FIG. 1 is a diagram illustrating a structure of a long preamble sequence for a common OFDM communication system. It should be noted that a current OFDM communication system uses the same preamble sequence in both a downlink (DL) and an uplink (UP). Referring to FIG. 1, in the long preamble sequence, a length-64 sequence is repeated 4 times and a length-128 sequence is repeated 2 times, and in the light of a characteristic of the OFDM communication system, the above-stated cyclic prefix (CP) is added to a front part of the 4 repeated length-64 sequences and to a front part of the 2 repeated length-128 sequences. In the following description, a sequence consisting of the 4 repeated length-64 sequences is referred to as "S" while a sequence consisting of the 2 repeated length-128 sequences is referred to as "P."

In addition, as mentioned above, signals obtained before performing IFFT are frequency-domain signals, while signals obtained after performing IFFT are time-domain signals. The long preamble sequence illustrated in FIG. 1 represents a time-domain long preamble sequence obtained after performing IFFT.

Meanwhile, frequency-domain long preamble sequences obtained before performing IFFT are illustrated below by way of example.

$$
\begin{aligned}
S(-100{:}100) = \{ &+1{+}j,0,0,0,+1{+}j,0,0,0,+1{+}j,0,0,0,+1{-}j,0,0,0,-1{+}j,0,0,0,+1{+}j,0,0,0,\\
&+1{+}j,0,0,0,+1{+}j,0,0,0,+1{-}j,0,0,0,-1{+}j,0,0,0,+1{+}j,0,0,0,+1{+}j,0,0,0,\\
&+1{+}j,0,0,0,+1{-}j,0,0,0,-1{+}j,0,0,0,+1{-}j,0,0,0,+1{-}j,0,0,0,+1{-}j,0,0,0,\\
&-1{-}j,0,0,0,+1{+}j,0,0,0,-1{+}j,0,0,0,-1{+}j,0,0,0,-1{+}j,0,0,0,+1{+}j,0,0,0,\\
&-1{-}j,0,0,0,\\
&0,0,0,0,\\
&-1{-}j,0,0,0,+1{-}j,0,0,0,+1{+}j,0,0,0,-1{-}j,0,0,0,-1{+}j,0,0,0,+1{-}j,0,0,0,\\
&+1{+}j,0,0,0,-1{+}j,0,0,0,+1{-}j,0,0,0,-1{-}j,0,0,0,+1{+}j,0,0,0,-1{+}j,0,0,0,\\
&-1{-}j,0,0,0,+1{+}j,0,0,0,+1{-}j,0,0,0,-1{-}j,0,0,0,+1{-}j,0,0,0,+1{+}j,0,0,0,\\
&-1{-}j,0,0,0,-1{+}j,0,0,0,-1{+}j,0,0,0,-1{-}j,0,0,0,+1{-}j,0,0,0,-1{+}j,0,0,0,\\
&+1{+}j\}{*}sqrt(2){*}sqrt(2)
\end{aligned}
$$

$$
\begin{aligned}
P(-100{:}100) = \{ &-1,\ 0,+1,\ 0,+1,\ 0,+1,\ 0,+1,\ 0,-1,\ 0,-1,\ 0,+1,\ 0,-1,\ 0,+1,\ 0,\\
&-1,\ 0,-1,\ 0,+1,\ 0,+1,\ 0,-1,\ 0,+1,\ 0,-1,\ 0,+1,\ 0,-1,\ 0,+1,\ 0,\\
&-1,\ 0,+1,\ 0,+1,\ 0,-1,\ 0,+1,\ 0,-1,\ 0,-1,\ 0,+1,\ 0,-1,\ 0,-1,\ 0,\\
&-1,\ 0,+1,\ 0,+1,\ 0,-1,\ 0,+1,\ 0,+1,\ 0,+1,\ 0,-1,\ 0,+1,\ 0,+1,\ 0,\\
&-1,\ 0,-1,\ 0,-1,\ 0,+1,\ 0,+1,\ 0,+1,\ 0,+1,\ 0,+1,\ 0,+1,\ 0,+1,\ 0,\\
&0,\ 0,\\
&-1,\ 0,-1,\ 0,+1,\ 0,-1,\ 0,-1,\ 0,+1,\ 0,+1,\ 0,+1,\ 0,-1,\ 0,+1,\ 0,\\
&+1,\ 0,+1,\ 0,-1,\ 0,-1,\ 0,-1,\ 0,-1,\ 0,-1,\ 0,+1,\ 0,-1,\ 0,\\
&-1,\ 0,-1,\ 0,-1,\ 0,-1,\ 0,+1,\ 0,+1,\ 0,+1,\ 0,-1,\ 0,+1,\ 0,\\
&-1,\ 0,+1,\ 0,+1,\ 0,-1,\ 0,+1,\ 0,+1,\ 0,+1,\ 0,-1,\ 0,-1,\ 0,-1,\ 0,\\
&-1,\ 0,-1,\ 0,+1,\ 0,-1,\ 0,-1,\ 0,+1,\ 0,-1,\ 0,-1,\ 0,+1,\ 0,-1\}\\
&{*}sqrt(2){*}sqrt(2)
\end{aligned}
$$

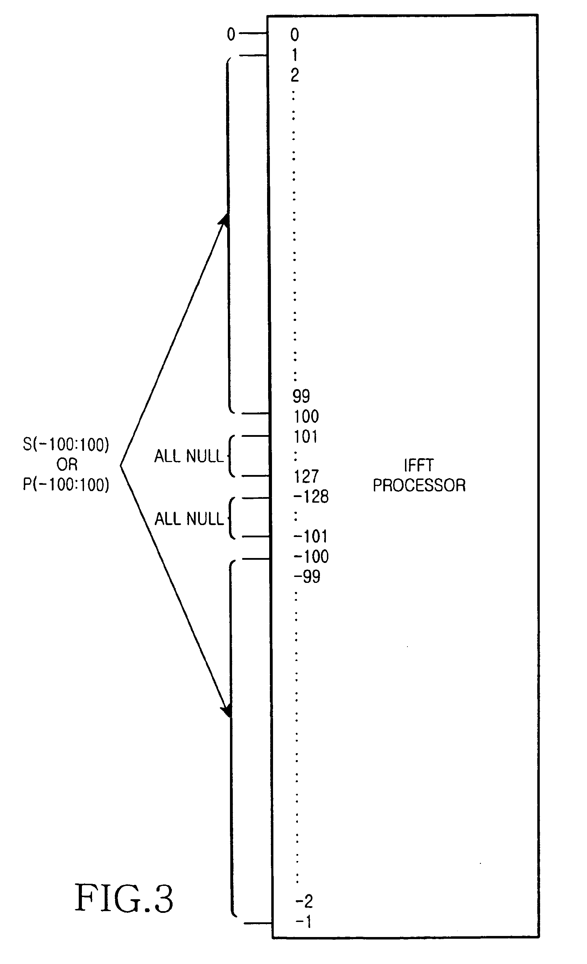

Numerals specified in the frequency-domain long preamble sequences S(-100:100) and P(-100:100) represent subcarriers' positions applied while IFFT is performed, and a detailed description thereof will be made with reference to FIG. 3. S(-100:100) represents a frequency-domain preamble sequence obtained by repeating a length-64 sequence 4 times, and P(-100:100) represents a frequency-domain preamble sequence obtained by repeating a length-128 sequence 2 times.

A structure of the long preamble sequence has been described so far with reference to FIG. 1. Next, a structure of a short preamble sequence will be described with reference to FIG. 2.

FIG. 2 is a diagram illustrating a structure of a short preamble sequence for a common OFDM communication system. Referring to FIG. 2, in the short preamble sequence, a length-128 sequence is repeated 2 times, and in the light of a characteristic of the OFDM communication system, the above-stated cyclic prefix (CP) is added to a front part of the 2 repeated length-128 sequences. In addition, the short preamble sequence illustrated in FIG. 2 represents a time-domain short preamble sequence obtained after performing IFFT, and a frequency-domain short preamble sequence equals the P(-100:100). As illustrated in FIGS. 1 and 2, a following part of the long preamble sequence has the same structure as the short preamble sequence. Hereinafter, the following part of the long preamble sequence and the short preamble sequence can be used in the same meaning.

Meanwhile, the long preamble sequence stated above must be generated taking the following conditions into consideration.

(1) The long preamble sequence should have a low PAPR.
In order to maximize transmission efficiency of a power amplifier (PA) in a transmitter of an OFDM communication system, a PAPR of an OFDM symbol must be low. That is, since an IFFT-transformed signal is applied to a power amplifier having a non-linear characteristic, a low PAPR is required. A PAPR of an OFDM symbol must be low in a ratio of maximum power to average power of a time-domain OFDM symbol corresponding to an IFFT processor's output terminal of the transmitter, and for a low ratio of the maximum power to the average power, uniform distribution must be provided. In other words, a PAPR of an output becomes low if symbols having a low cross correlation are combined in an IFFT processor's input terminal of the transmitter, i.e., in a frequency domain.

(2) The long preamble sequence should be suitable for parameter estimation needed for communication initialization. The parameter estimation includes channel estimation, frequency offset estimation, and time offset estimation.

(3) The long preamble sequence should have low complexity and low overhead.

(4) The long preamble sequence should be available for coarse frequency offset estimation.

A function of the long preamble sequences generated considering the foregoing conditions will now be described herein below.

(1) A sequence obtained by repeating a length-64 sequence 4 times is used for time offset estimation and coarse frequency offset estimation.
(2) A sequence obtained by repeating a length-128 sequence 2 times is used for fine frequency offset estimation.

As a result, the long preamble sequence has the following uses in the OFDM communication system.

(1) The long preamble sequence is used as a first preamble sequence of a downlink protocol data unit (hereinafter referred to as "PDU").
(2) The long preamble sequence is used for initial ranging.
(3) The long preamble sequence is used for bandwidth request ranging.

Further, the short preamble sequence has the following uses in the OFDM communication system.

(1) The short preamble sequence is used as an uplink data preamble sequence.
(2) The short preamble sequence is used for periodic ranging.

In the OFDM communication system, since accurate synchronization can be acquired by performing initial ranging and periodic ranging, the uplink data preamble sequence is mainly used for channel estimation. For channel estimation, PAPR, performance and complexity should be taken into consideration. In the case of the existing short preamble sequence, a PAPR shows 3.5805[dB], and various channel estimation algorithms such as a minimum mean square error (hereinafter referred to as "MMSE") algorithm and a least square (hereinafter referred to as "LS") algorithm are used.

A mapping relation between subcarriers and a preamble sequence during IFFT in an OFDM communication system will now be described with reference to FIG. 3.

FIG. 3 is a diagram illustrating a mapping relation between subcarriers and a preamble sequence during IFFT in an OFDM communication system. It is assumed in FIG. 3 that if the number of all of the subcarriers for an OFDM communication system is 256, the 256 subcarriers include -128th to 127th subcarriers, and if the number of subcarriers actually in use is 200, the 200 subcarriers include -100th,···,-1st,1st,···,100th subcarriers. In FIG. 3, numerals at an IFFT processor's input terminal represent frequency components, i.e., unique numbers of subcarriers. The reason for inserting null data, or 0-data, in a 0th subcarrier is because the 0th subcarrier, after performing IFFT, represents a reference point of a preamble sequence in a time domain, i.e., represents a DC (Direct Current) component in a time domain.

Also, the null data is inserted into 28 subcarriers of the -128th to -101st subcarriers and 27 subcarriers of the 101st to 127th subcarriers, excluding the 200 subcarriers actually in use and the 0th subcarrier. Here, the reason for inserting null data into 28 subcarriers of the -128th to -101st subcarriers and 27 subcarriers of the 101st to 127th subcarriers is to provide a guard interval in a frequency domain since the 28 subcarriers of the -128th to -101st subcarriers and the 27 subcarriers of the 101st to 127th subcarriers correspond to a high frequency band in the frequency domain.

As a result, if a frequency-domain preamble sequence of S(-100:100) or P(-100:100) is applied to an IFFT processor, the IFFT processor maps the frequency-domain preamble sequence of S(-100:100) or P(-100:100) to corresponding subcarriers, IFFT-transforms the mapped preamble sequence, and outputs a time-domain preamble sequence.

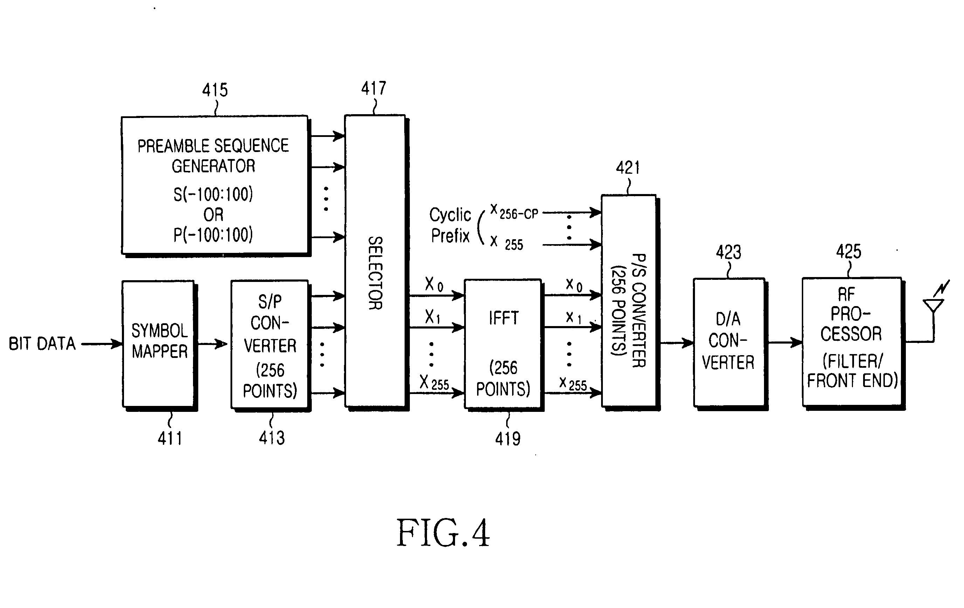

A structure of a transmitter in an OFDM communication system will now be described with reference to FIG. 4.

FIG. 4 is a block diagram illustrating a transmitter structure of a conventional OFDM communication system, which transmits data using one transmission antenna. With reference to FIG. 4, a detailed description will now be made of a transmitter structure of a conventional OFDM communication system, which transmits data using one transmission antenna.

If information bits to be transmitted are generated in the OFDM communication system, the information bits are applied to a symbol mapper 411. The symbol mapper 411 symbol-maps the input information bits by a preset modulation scheme, and then provides the symbol-mapped information bits to a serial-to-parallel (S/P) converter 413. The S/P converter 413 performs 256-point parallel conversion on the symbol received from the symbol mapper 411 and provides its output to a selector 417. As mentioned above, "256" in the 256-point parallel conversion indicates the number of subcarriers. A preamble sequence generator 415, under the control of a controller (not shown), generates a corresponding preamble sequence and provides the generated preamble sequence to the selector 417. The corresponding preamble sequence represents S(-100:100) or P(-100:100) described in conjunction with FIGS. 1 and 2. The selector 417 selects a signal output from the S/P converter 413 or a signal output from the preamble sequence generator 415 according to scheduling of a corresponding time, and provides the selected signal to an IFFT processor 419.

The selector 417 determines whether it will transmit the preamble sequence generated by the preamble sequence generator 415 or the symbols generated by the S/P converter 413. If the selector 417 determines to transmit a preamble sequence, it transmits the preamble sequence generated by the preamble sequence generator 415. In contrast, if the selector 417 determines to transmit symbols, it transmits the symbols generated by the S/P converter 413.

The IFFT processor 419 performs 256-point IFFT on a signal received from the S/P converter 413 or the preamble sequence generator 415, and provides its output to a parallel-to-serial (P/S) converter 421. In addition to the signal output from the IFFT processor 419, a cyclic prefix is applied to the P/S converter 421. The P/S converter 421 serial-converts the signal output from the IFFT processor 419 and the cyclic prefix, and provides its output to a digital-to-analog (D/A) converter 423. The D/A converter 423 analog-converts a signal output from the P/S converter 421, and provides the analog-converted signal to a radio frequency (RF) processor 425. The RF processor 425 including a filter, RF-processes a signal output from the D/A converter 423 so that it can be transmitted over the air, and then transmits the RF signal via an antenna.

In a receiver, channel estimation is performed by a preamble sequence generated from the short preamble sequence. However, the short preamble sequence P(-100:100) is a short preamble sequence of an even subcarrier. The "short preamble sequence of an even subcarrier" means a preamble sequence for which a unique number of a subcarrier into which data of+1 or -1, not null data, is inserted among elements constituting the short preamble sequence is an even number. Although the 0th subcarrier (DC component) is an even subcarrier, it is excluded herein since null data should be necessarily inserted therein.

One of the main functions of the short preamble sequence P(-100;100) is channel estimation mentioned above. However, when channel estimation is performed using only a short preamble sequence of the even subcarrier, a channel corresponding to an odd subcarrier cannot be estimated, so channel estimation must be performed on an even subcarrier. Such estimation causes performance deterioration. For performance improvement by the channel estimation, a short preamble sequence of an even subcarrier and a short preamble sequence of an odd subcarrier are both required. However, the existing short preamble sequence P(-100:100) is a short preamble sequence of an even subcarrier, and a short preamble sequence of an odd subcarrier does not exist.

Accordingly, there is a demand for an odd subcarrier's short preamble sequence having a low PAPR.

US 2002/041635 suggests inserting a preamble, which corresponds to a respective transmitter antenna, into a signal frame. The preamble matches known values by a respective receiver to decode the signals and permit multiple signals to be transferred from the transmitter to the receiver.

It is the object of the present invention to provide an apparatus and method for decreasing a PAPR in an OFOM communication system

This object is solved by the subject matters of the independent claims.

Preferred embodiments are defined in the dependent claims.

It is an aspect of the present invention to provide an apparatus and method for generating an odd subcarrier's short preamble sequence having a low PAPR.

It is another aspect of the present invention to provide an apparatus and method for transmitting a short preamble sequence of an odd subcarrier and a short preamble sequence of an even subcarrier using one antenna.

It is still another aspect of the present invention to provide an apparatus and method for transmitting a short preamble sequence of an odd subcarrier and a short preamble sequence of an even subcarrier using a plurality of antennas.

To achieve the above, there is provided an apparatus and method for generating a preamble sequence in an orthogonal frequency division multiplexing (OFDM) communication system having one or two transmission antennas. The apparatus and method proposes an odd subcarrier's short preamble sequence having a low peak-to-average power ratio (PAPR), so that a receiver can perform accurate channel estimation using the odd subcarrier's short preamble sequence. That is, a preamble sequence is generated using the proposed odd subcarrier's short preamble sequence and an even subcarrier's short preamble sequence, and then transmitted to the receiver. Then the receiver performs accurate channel estimation using the odd subcarrier's short preamble sequence and the even subcarrier's short preamble sequence.

The above features and advantages of the present invention will become more apparent from the following detailed description when taken in conjunction with the accompanying drawings in which:

FIG. 1 is a diagram illustrating a structure of a long preamble sequence for a common OFDM communication system;

FIG. 2 is a diagram illustrating a structure of a short preamble sequence for a common OFDM communication system;

FIG. 3 is a diagram illustrating a mapping relation between subcarriers and a preamble sequence during IFFT in a common OFDM communication system;

FIG. 4 is a block diagram illustrating a transmitter structure of a general OFDM communication system using one transmission antenna;

FIG. 5 is a block diagram illustrating a transmitter structure of an OFDM communication system using two transmission antennas according to an embodiment of the present invention;

FIG. 6 illustrates Preamble Transmission Rule 1 for transmitting a preamble in an OFDM communication system using one transmission antenna and a corresponding preamble sequence generation procedure according to an embodiment of the present invention;

FIG. 7 illustrates Preamble Transmission Rule 2 for transmitting a preamble in an OFDM communication system using two transmission antennas and a corresponding preamble sequence generation procedure according to an embodiment of the present invention;

FIG. 8 illustrates Preamble Transmission Rule 3 for transmitting a preamble in an OFDM communication system using two transmission antennas and a corresponding preamble sequence generation procedure according to an embodiment of the present invention;

FIG. 9 is a diagram illustrating a mapping relation between subcarriers and a preamble sequence during IFFT in an OFDM communication system using one transmission antenna according to an embodiment of the present invention; and

FIG. 10 is a diagram illustrating a mapping relation between subcarriers and a preamble sequence during IFFT in an OFDM communication system using two transmission antennas according to another embodiment of the present invention.

Several preferred embodiments of the present invention will now be described in detail with reference to the annexed drawings. In the following description, a detailed description of known functions and configurations incorporated herein has been omitted for conciseness.

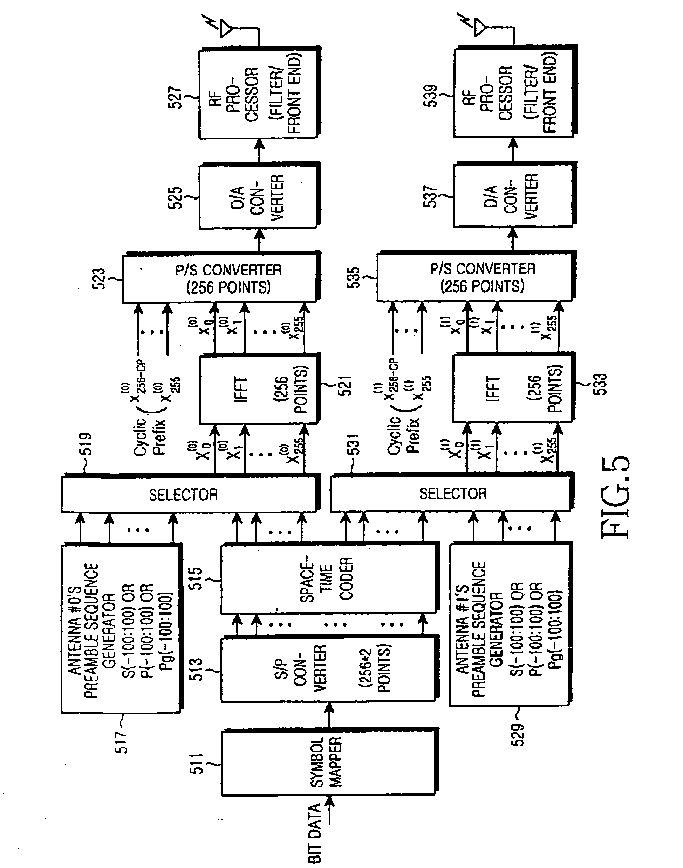

FIG. 5 is a block diagram illustrating a transmitter structure of an OFDM communication system using two transmission antennas. Referring to FIG. 5, if information bits to be transmitted are generated in the OFDM communication system, the information bits are applied to a symbol mapper 511. The symbol mapper 511 symbol-maps the input information bits, and then provides the symbol-mapped information bits to a serial-to-parallel (S/P) converter 513. The S/P converter 513 performs 256*2-point parallel conversion on the symbol output from the symbol mapper 511. In the 256*2-point parallel conversion, "256" indicates the number of subcarriers and "2" indicates the number of antennas. That is, if the symbol mapper 511 generates 256 symbols for an antenna #0 and 256 symbols for an antenna #1, the S/P converter 513 converts 512 received symbols into parallel symbols. Generally, symbols output from the S/P converter 513 are called "OFDM symbols." The OFDM symbols output from the S/P converter 513 are delivered to a space-time coder 515.

The space-time coder 515 performs the following procedure. Of 512 parallel symbols generated from the S/P converter 513, high 256 OFDM symbols are represented by $S_0$ and low 256 OFDM symbols are represented by $S_1$. As illustrated in Table 1 below, the OFDM symbols S0 and S1 can be combined with OFDM symbols - $S_1^*$ and $S_0^*$, and transmitted for two OFDM-symbol periods.

Table 1

|  | Antenna #0 selector | Antenna #1 selector |
|---|---|---|
| time 0 | $S_0$ | $S_1$ |
| time 1 | $-S_1^*$ | $S_0^*$ |

The space-time coder 515 can apply various space-time coding methods other than the above symbol mapping method.

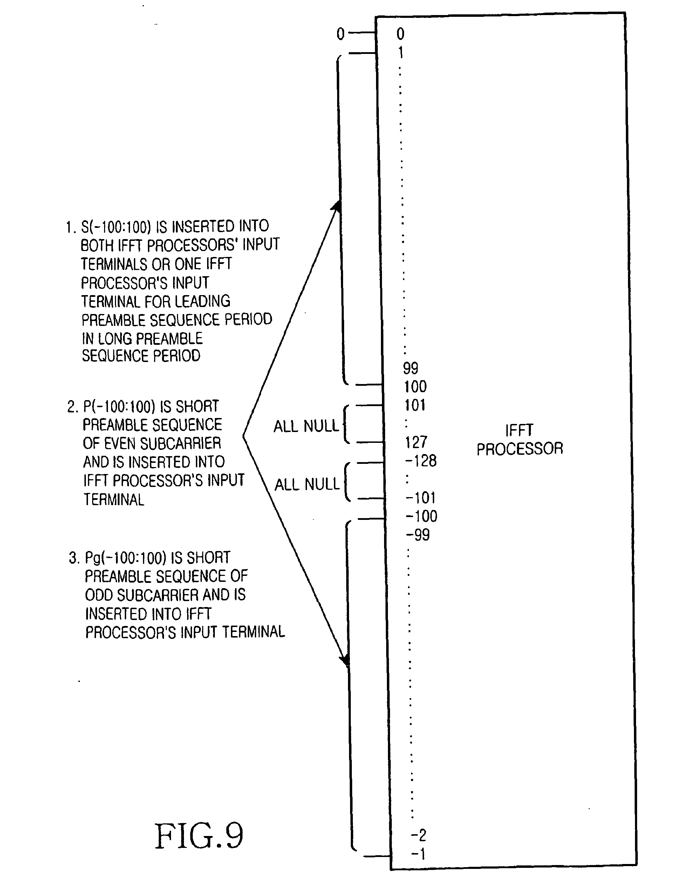

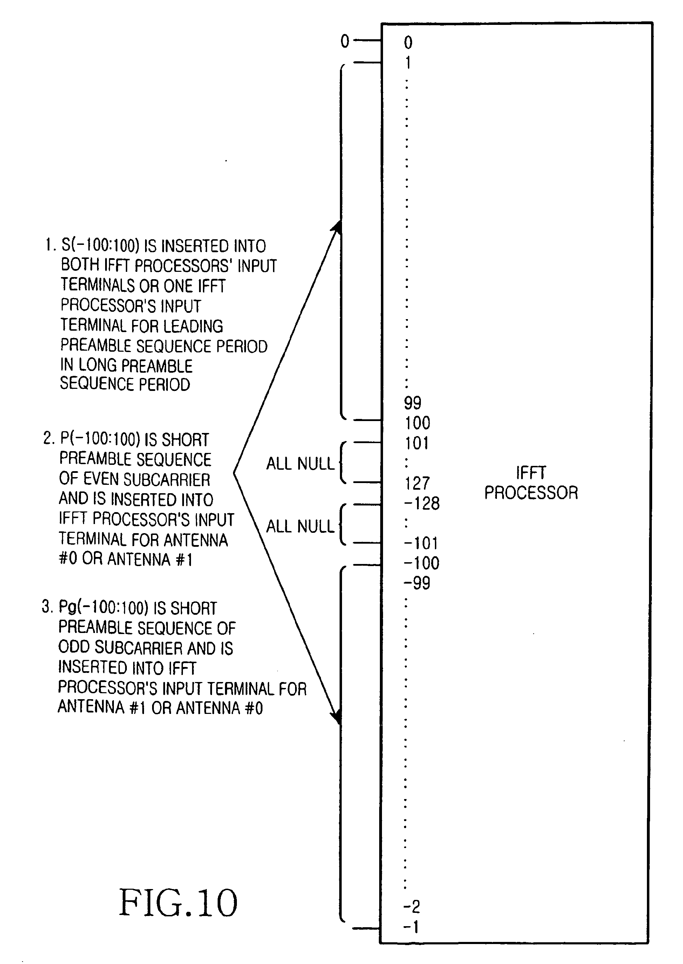

An antenna #0's preamble sequence generator 517 generates a preamble sequence under the control of a controller (not shown), and provides the generated preamble sequence to a selector 519. As illustrated, in an embodiment of the present invention, the antenna #0's preamble sequence generator 517 generates 3 preamble sequences. The 3 preamble sequences include S(-100:100), P(-100:100) and Pg(-100:100). The Pg(-100:100) will be described in detail with reference to FIGs. 9 and 10.

That is, the antenna #0's preamble sequence generator 517 generates one of the 3 preamble sequences according to a control command from the controller. The selector 519 selects a signal output from the space-time coder 515 or a signal output from the antenna #0's preamble sequence generator 517 according to scheduling of a corresponding time, and provides its output to an IFFT processor 521. In other words, the selector 519 determines whether it will transmit the preamble sequence generated by the antenna #0's preamble sequence generator 517 or the symbols generated by the space-time coder 515. If the selector 519 determines to transmit a preamble sequence, it transmits the preamble sequence generated by the antenna #0's preamble sequence generator 517. In contrast, if the selector 519 determines to transmit symbols, it transmits the symbols generated by the space-time coder 515.

The IFFT processor 521 performs 256-point IFFT on a signal output from the space-time coder 515 or the antenna #0's preamble sequence generator 517, and provides its output to a parallel-to-serial (P/S) converter 523. As mentioned above, "256" in the 256-point IFFT represents 256 subcarriers. In addition to the signal output from the IFFT 521, a cyclic prefix is applied to the P/S converter 523. The P/S converter 523 serial-converts the signal output from the IFFT 521 and the cyclic prefix, and provides its output to a digital-to-analog (D/A) converter 525. The D/A converter 525 analog-converts a signal output from the P/S converter 523, and provides its output to an RF processor 527. The RF processor 527 including a filter, RF-processes a signal output from the D/A converter 525 so that it can be transmitted over the air, and then transmits the RF signal via an antenna #0.

An antenna #1's preamble sequence generator 529 generates a preamble sequence under the control of the controller, and provides the generated preamble sequence to a selector 531. As illustrated, in the embodiment of the present invention, the antenna #1's preamble sequence generator 529 generates 3 preamble sequences. The 3 preamble sequences include S(-100:100), P(-100:100) and Pg(-100:100). The Pg(-100:100) will be described in detail with reference to FIGs. 9 and 10.

That is, the antenna #1's preamble sequence generator 529 generates one of the 3 preamble sequences according to a control command from the controller. The selector 531 selects a signal output from the space-time coder 515 or a signal output from the antenna #1's preamble sequence generator 529 according to scheduling of a corresponding time, and provides its output to an IFFT processor 533. In other words, the selector 531 determines whether it will transmit the preamble sequence generated by the antenna #1's preamble sequence generator 529 or the symbols generated by the space-time coder 515. If the selector 531 determines to transmit a preamble sequence, it transmits the preamble sequence generated by the antenna #1's preamble sequence generator 529. In contrast, if the selector 531 determines to transmit symbols, it transmits the symbols generated by the space-time coder 515.

The IFFT processor 533 performs 256-point IFFT on a signal output from the space-time coder 515 or the antenna #1's preamble sequence generator 529, and provides its output to a P/S converter 535. As mentioned above, "256" in the 256-point IFFT represents 256 subcarriers. In addition to the signal output from the IFFT 533, a cyclic prefix is applied to the P/S converter 535. The P/S converter 535 serial-converts the signal output from the IFFT 533 and the cyclic prefix, and provides its output to a D/A converter 537. The D/A converter 537 analog-converts a signal output from the P/S converter 535, and provides its output to an RF processor 539. The RF processor 539 including a filter, RF-processes a signal output from the D/A converter 537 so that it can be transmitted over the air, and then transmits the RF signal via an antenna #1.

A procedure for transmitting data or a preamble sequence using 2 transmission antennas has been described so far with reference to FIG. 5. However, it is also possible to transmit the data or preamble sequence using one transmission antenna. With reference to FIG. 4, a description will now be made of a procedure for transmitting data or a preamble sequence using one transmission antenna.

If information bits to be transmitted are generated in the OFDM communication system, the information bits are applied to a symbol mapper 411. The symbol mapper 411 symbol-maps the input information bits by a preset modulation scheme, and then provides the symbol-mapped information bits to an S/P converter 413. The S/P converter 413 performs 256-point parallel conversion on the symbol received from the symbol mapper 411 and provides its output to a selector 417. As mentioned above, "256" in the 256-point parallel conversion indicates the number of subcarriers. A preamble sequence generator 415, under the control of a controller (not shown), generates a corresponding preamble sequence and provides the generated preamble sequence to the selector 417.

The preamble sequence generator 415 generates 3 preamble sequences, and the 3 preamble sequences include S(-100:100), P(-100:100) and Pg(-100:100). The Pg(-100:100) will be described in detail with reference to FIGs. 9 and 10. The selector 417 selects a signal output from the S/P converter 413 or a signal output from the preamble sequence generator 415 according to scheduling of a corresponding time, and provides the selected signal to an IFFT processor 419. In other words, the selector 417 determines whether it will transmit the preamble sequence generated by the preamble sequence generator 415 or the symbols generated by the S/P converter 413. If the selector 417 determines to transmit a preamble sequence, it transmits the preamble sequence generated by the preamble sequence generator 415. In contrast, if the selector 417 determines to transmit symbols, it transmits the symbols generated by the S/P converter 413.

The IFFT processor 419 performs 256-point IFFT on a signal received from the S/P converter 413 or the preamble sequence generator 415, and provides its output to a P/S converter 421. In addition to the signal output from the IFFT processor 419, a cyclic prefix is applied to the P/S converter 421. The P/S converter 421 serial-converts the signal output from the IFFT processor 419 and the cyclic prefix, and provides its output to a D/A converter 423. The D/A converter 423 analog-converts a signal output from the P/S converter 421, and provides the analog-converted signal to an RF processor 425. The RF processor 425 including a filter, RF-processes a signal output from the D/A converter 423 so that it can be transmitted over the air, and then transmits the RF signal via an antenna.

As described above, although the conventional preamble sequence generator generates only 2 preamble sequences of S(-100:100) and P(-100:100), the new preamble sequence generator can generate 3 preamble sequences of S(-100:100), P(-100:100) and Pg(-100:100). The Pg(-100:100) is a short preamble sequence of an odd subcarrier in a frequency domain. In the OFDM communication system, signals obtained before performing IFFT are frequency-domain signals, while signals obtained after performing IFFT are time-domain signals. The "short preamble sequence of an odd subcarrier" refers to a preamble sequence for which a unique number of a subcarrier into which data of+1 or -1, not null data, is inserted among elements constituting the short preamble sequence is an odd number.

With reference to FIGs. 9 and 10, a description will now be made of a preamble sequence generated by the preamble sequence generator and a mapping relation between subcarriers and a preamble sequence during IFFT in an OFDM communication system. The present invention proposes an apparatus and method for generating an odd subcarrier's short preamble sequence having a minimum PAPR in an OFDM communication system in which the total number of subcarriers is 256 and unique numbers of subcarriers actually in use are -100, -99, ... -1, 1..., 99, 100.

The preamble sequence is classified into a long preamble sequence and a short preamble sequence. In the long preamble sequence, a length-64 sequence is repeated 4 times and a length-128 sequence is repeated 2 times, and in the light of a characteristic of the OFDM communication system, a cyclic prefix is added to a front part of the 4 repeated length-64 sequences and a front part of the 2 repeated length-128 sequences. Further, in the short preamble sequence, a length-128 sequence is repeated 2 times, and in the light of a characteristic of the OFDM communication system, the cyclic prefix is added to a front part of the 2 repeated length-128 sequences.

Of the preamble sequences S(-100:100), P(-100:100) and Pg(-100:100) generated by the preamble sequence generator, S(100:100) and P(-100:100) are identical to the preamble sequences described in the related art section, and Pg(-100:100) proposed in the present invention is given by

```
Pg(-100:100)= {0,-1, 0,-1, 0,+1, 0,-1, 0,+1, 0,-1, 0,+1, 0,+1, 0,-1, 0,-1,
               0,+1, 0,+1, 0,-1, 0,+1, 0,-1, 0,+1, 0,-1, 0,-1, 0,+1, 0,+1,
               0,+1, 0,+1, 0,-1, 0,+1, 0,-1, 0,+1, 0,-1, 0,-1 ,0,+1, 0,+1,
               0,-1, 0,-1, 0,+1, 0,-1, 0,+1, 0,-1, 0,+1, 0,+1, 0,-1, 0,-1,
               0,-1, 0,-1, 0,+1, 0,+1, 0,+1,0,+1, 0,+1, 0,-1, 0,+1, 0,+1,
               0,-1,
               0,-1, 0,+1, 0,-1, 0,+1, 0,-1, 0,+1, 0,+1, 0,-1, 0,-1, 0,-1,
               0,-1, 0,+1, 0,+1, 0,+1, 0,+1, 0,+1, 0,-1, 0,+1, 0,+1, 0,-1,
               0,-1, 0,+1, 0,+1, 0,+1, 0,+1, 0,+1, 0,-1, 0,+1, 0,+1, 0,-1,
               0,-1, 0,+1, 0,+1, 0,+1, 0,+1, 0,+1, 0,-1, 0,+1, 0,+1, 0,+1,
               0,+1, 0,-1, 0,-1, 0,-1, 0,-1, 0,-1, 0,+1, 0,-1, 0,-1, 0}
               *sqrt(2)*sqrt(2)
```

FIG. 9 is a diagram illustrating a mapping relation between subcarriers and a preamble sequence during IFFT in an OFDM communication system using one transmission antenna according to an embodiment of the present invention. It is assumed in FIG. 9 that if the number of all of the subcarriers for an OFDM communication system is 256, the 256 subcarriers include -128th to 127th subcarriers, and if the number of subcarriers actually in use is 200, the 200 subcarriers include - 100th,···,-1st,1st,···,100th subcarriers. In FIG. 9, numerals at an IFFT processor's input terminal represent frequency components, i.e., unique numbers of subcarriers. The reason for inserting null data, or 0-data, in a 0th subcarrier is because the 0th subcarrier, after performing IFFT, represents a reference point of a preamble sequence in a time domain, i. e., represents a DC component in a time domain.

Also, the null data is inserted into 28 subcarriers of the -128th to -101st subcarriers and 27 subcarriers of the 101st to 127th subcarriers, excluding the 200 subcarriers actually in use and the 0th subcarrier. Here, the reason for inserting null data into 28 subcarriers of the -128th to -101st subcarriers and 27 subcarriers of the 101st to 127th subcarriers is to provide a guard interval in a frequency domain since the 28 subcarriers of the -128th to -101st subcarriers and the 27 subcarriers of the 101st to 127th subcarriers correspond to a high frequency band in the frequency domain. As a result, if a frequency-domain preamble sequence of S(-100:100), P(-100:100) or Pg(-100:100) is applied to the IFFT processor, the IFFT processor maps the frequency-domain preamble sequence of S(-100:100), P(-100:100) or Pg(-100: 100) to corresponding subcarriers, IFFT-transforms the mapped preamble sequence, and outputs a time-domain preamble sequence. A description will now be made of situations in which the S(-100:100), P(-100:100) and Pg(-100:100) are used.

(1) S(-100:100)

It is inserted into IFFT processors' input terminals of both antennas (antenna #0 and antenna #1) or an IFFT processor's input terminal of one antenna for a leading preamble sequence period in a long preamble sequence period.

(2) P(-100:100)

It is a short preamble sequence of an even subcarrier and is inserted into an IFFT processor's input terminal. The "short preamble sequence of an even subcarrier" means a preamble sequence for which a unique number of a subcarrier into which data of+1 or -1, not null data, is inserted among elements constituting the short preamble sequence is an even number.

(3) Pg(-100:100)

It is a short preamble sequence of an odd subcarrier and is inserted into an IFFT processor's input terminal. The "short preamble sequence of an odd subcarrier" means a preamble sequence for which a unique number of a subcarrier into which data of+1 or -1, not null data, is inserted among elements constituting the short preamble sequence is an odd number. That is, this is an odd subcarrier's short preamble sequence proposed in the present invention.

FIG. 10 is a diagram illustrating a mapping relation between subcarriers and a preamble sequence during IFFT in an OFDM communication system using two transmission antennas according to another embodiment of the present invention. It is assumed in FIG. 10 that if the number of all of the subcarriers for an OFDM communication system is 256, the 256 subcarriers include -128th to 127th subcarriers, and if the number of subcarriers actually in use is 200, the 200 subcarriers include - 100th,···,-1st,1st,···,100th subcarriers. In FIG. 10, numerals at an IFFT processor's input terminal represent frequency components, i.e., unique numbers of subcarriers. The reason for inserting null data, or 0-data, in a $0^{th}$ subcarrier is because the $0^{th}$ subcarrier, after performing IFFT, represents a reference point of a preamble sequence in a time domain, i.e., represents a DC component in a time domain.

Also, the null data is inserted into 28 subcarriers of the $-128^{th}$ to $-101^{st}$ subcarriers and 27 subcarriers of the $101^{st}$ to $127^{th}$ subcarriers, excluding the 200 subcarriers actually in use and the $0^{th}$ subcarrier. Here, the reason for inserting null data into 28 subcarriers of the $-128^{th}$ to $-101^{st}$ subcarriers and 27 subcarriers of the $101^{st}$ to $127^{th}$ subcarriers is to provide a guard interval in a frequency domain since the 28 subcarriers of the $-128^{th}$ to $-101^{st}$ subcarriers and the 27 subcarriers of the $101^{st}$ to $127^{th}$ subcarriers correspond to a high frequency band in the frequency domain. As a result, if a frequency-domain preamble sequence of S(-100:100), P(-100:100) or Pg(-100:100) is applied to the IFFT processor, the IFFT processor maps the frequency-domain preamble sequence of S(-100:100), P(-100:100) or Pg(-100:100) to corresponding subcarriers, IFFT-transforms the mapped preamble sequence, and outputs a time-domain preamble sequence. A description will now be made of situations in which the S(-100:100), P(-100:100) and Pg(-100:100) are used.

(1) S(-100:100)

It is inserted into IFFT processors' input terminals of both antennas (antenna #0 and antenna #1) or an IFFT processor's input terminal of one antenna for a leading preamble sequence period in a long preamble sequence period.

(2) P(-100:100)

It is a short preamble sequence of an even subcarrier and is inserted into an IFFT processor's input terminal for an antenna #0 or an antenna #1. The "short preamble sequence of an even subcarrier" means a preamble sequence for which a unique number of a subcarrier into which data of +1 or -1, not null data, is inserted among elements constituting the short preamble sequence is an even number.

(3) Pg(-100:100)

It is a short preamble sequence of an odd subcarrier and is inserted into an IFFT processor's input terminal. The "short preamble sequence of an odd subcarrier" means a preamble sequence for which a unique number of a subcarrier into which data of +1 or -1, not null data, is inserted among elements constituting the short preamble sequence is an odd number. That is, this is an odd subcarrier's short preamble sequence proposed in the present invention.

Consequently, unlike the conventional technology, the present invention proposes an apparatus for generating an odd subcarrier's short preamble sequence having a low PAPR in an OFDM communication system using one or two transmission antennas, thereby improving performance of the OFDM communication system.

In the OFDM communication system using 2 transmission antennas, the odd subcarrier's short preamble sequence proposed in the present invention has a PAPR of 2.7448dB. The cyclic prefix is not considered in a process of calculating the PAPR.

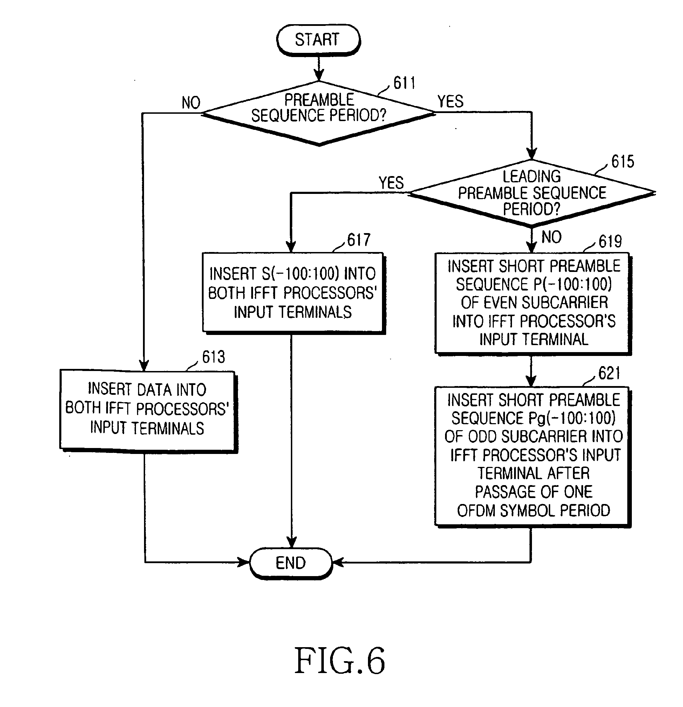

FIG. 6 illustrates Preamble Transmission Rule 1 for transmitting a preamble in an OFDM communication system using one transmission antenna according to an embodiment of the present invention. With reference to FIG. 6, a detailed description will now be made of Preamble Transmission Rule 1 according to an embodiment of the present invention.

In step 611, a transmitter determines whether a transmission signal period is a preamble sequence period. The transmission signal is determined and selected by a selector as described above. As a result of the determination, if the transmission signal period is not a preamble sequence period but a data transmission period, the transmitter proceeds to step 613. In step 613, the transmitter performs a control operation of mapping data to both IFFT processors' input terminals, and then ends the procedure.

If it is determined in step 611 that the transmission signal period is a preamble sequence period, the transmitter proceeds to step 615. In step 615, the transmitter determines whether the preamble sequence period is a leading preamble sequence period in a long preamble sequence period. If the preamble sequence period is a leading preamble sequence period in a long preamble sequence period, the transmitter proceeds to step 617.

In step 617, the transmitter performs a control operation of mapping a leading preamble sequence S(-100:1) in the long preamble sequence period to corresponding subcarriers on the IFFT processor's input terminal, and then ends the procedure. The preamble sequence S(-100:100) is generated by a preamble sequence generator according to a control command from a controller, as described above. If it is determined in step 615 that the preamble sequence period is not a leading preamble sequence period in a long preamble sequence period, but a short preamble sequence period (a following part period of the long preamble sequence period), then the transmitter proceeds to step 619.

In step 619, the transmitter maps an even subcarrier's short preamble sequence P(-100:100) to the IFFT processor's input terminal, and then goes to step 621. The even subcarrier's short preamble sequence is identical to that described above. In step 621, the transmitter maps an odd subcarrier's short preamble sequence Pg(-100:100) to the IFFT processor's input terminal after passage of one OFDM symbol period, and then ends the procedure. The odd subcarrier's short preamble sequence is also identical to that described above. To sum up, in Preamble Transmission Rule 1, the transmitter transmits both the odd subcarrier's short preamble sequence and the even subcarrier's short preamble sequence, so that a receiver can easily perform channel estimation. That is, conventionally, an odd subcarrier's short preamble sequence was estimated using an even subcarrier's short preamble sequence. In this case, however, a receiver could not perform accurate channel estimation.

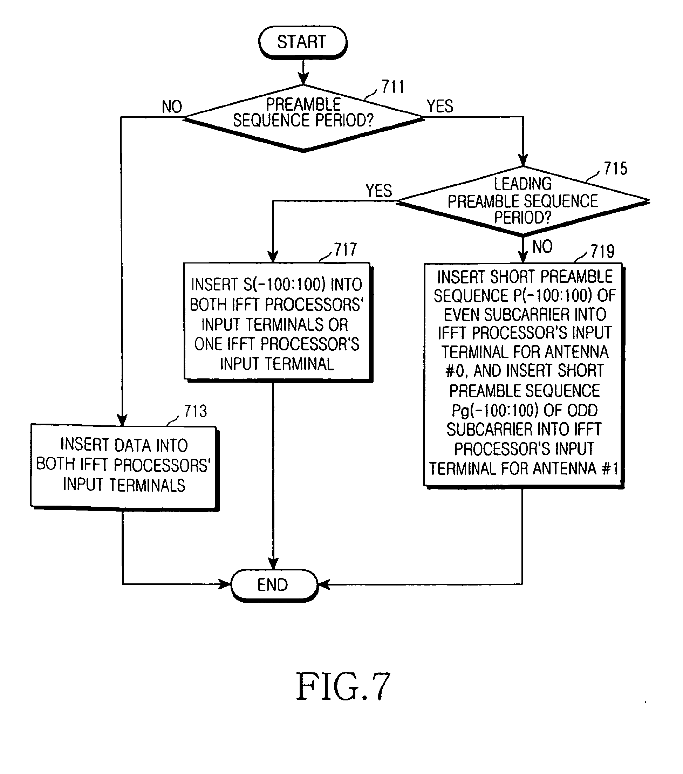

FIG. 7 illustrates Preamble Transmission Rule 2 for transmitting a preamble in an OFDM communication system using two transmission antennas according to an embodiment of the present invention. With reference to FIG. 7, a detailed description will now be made of Preamble Transmission Rule 2 according to an embodiment of the present invention.

In step 711, a transmitter determines whether a transmission signal period is a preamble sequence period. The transmission signal is determined and selected by a selector as described above. As a result of the determination, if the transmission signal period is not a preamble sequence period but a data transmission period, the transmitter proceeds to step 713. In step 713, the transmitter performs a control operation of mapping data to both IFFT processors' input terminals, and then ends the procedure.

If it is determined in step 711 that the transmission signal period is a preamble sequence period, the transmitter proceeds to step 715. In step 715, the transmitter determines whether the preamble sequence period is a leading preamble sequence period in a long preamble sequence period. If the preamble sequence period is a leading preamble sequence period in a long preamble sequence period, the transmitter proceeds to step 717.

In step 717, the transmitter performs a control operation of mapping a leading preamble sequence S(-100:1) in the long preamble sequence period to corresponding subcarriers on the IFFT processor's input terminal, and then ends the procedure. The preamble sequence S(-100:100) is generated by a preamble sequence generator according to a control command from a controller, as described above. If it is determined in step 715 that the preamble sequence period is not a leading preamble sequence period in a long preamble sequence period, but a short preamble sequence period (a following part period of the long preamble sequence period), then the transmitter proceeds to step 719.

In step 719, the transmitter maps an even subcarrier's short preamble sequence P(-100:100) to an IFFT processor's input terminal for an antenna #0, maps an odd subcarrier's short preamble sequence Pg(-100:100) to an IFFT processor's input terminal for an antenna #1, and then ends the procedure. The "short preamble sequence of an even subcarrier" means a preamble sequence for which a unique number of a subcarrier into which data of +1 or -1, not null data, is inserted among elements constituting the short preamble sequence is an even number. Although the 0th subcarrier (DC component) is an even subcarrier, it is excluded herein since null data should be necessarily inserted therein.

In addition, the "short preamble sequence of an odd subcarrier" means a preamble sequence for which a unique number of a subcarrier into which data of +1 or - 1, not null data, is inserted among elements constituting the short preamble sequence is an odd number. In FIG. 7, an even subcarrier's short preamble sequence is transmitted via the antenna #0, and an odd subcarrier's short preamble sequence is transmitted via the antenna #1. Then a receiver performs accurate channel estimation by receiving the even subcarrier's short preamble sequence and the odd subcarrier's short preamble sequence.

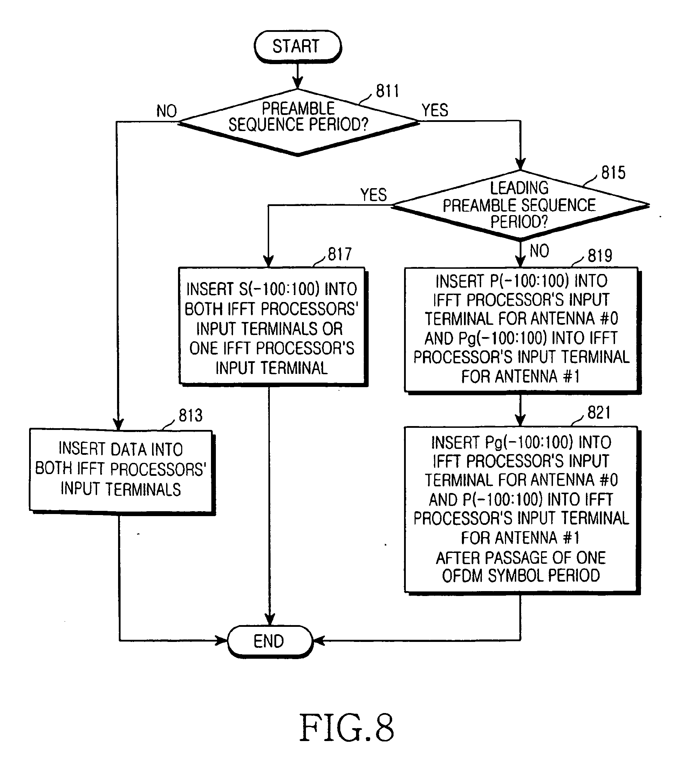

FIG. 8 illustrates Preamble Transmission Rule 3 for transmitting a preamble in an OFDM communication system using two transmission antennas according to an embodiment of the present invention. With reference to FIG. 8, a detailed description will now be made of Preamble Transmission Rule 3 according to an embodiment of the present invention.

In step 811, a transmitter determines whether a transmission signal period is a preamble sequence period. The transmission signal is determined and selected by a selector as described above. As a result of the determination, if the transmission signal period is not a preamble sequence period but a data transmission period, the transmitter proceeds to step 813. In step 813, the transmitter performs a control operation of mapping data to both IFFT processors' input terminals, and then ends the procedure.

If it is determined in step 811 that the transmission signal period is a preamble sequence period, the transmitter proceeds to step 815. In step 815, the transmitter determines whether the preamble sequence period is a leading preamble sequence period in a long preamble sequence period. If the preamble sequence period is a leading preamble sequence period in a long preamble sequence period, the transmitter proceeds to step 817.

In step 817, the transmitter performs a control operation of mapping a leading preamble sequence S(-100:1) in the long preamble sequence period to corresponding subcarriers on the IFFT processor's input terminal, and then ends the procedure. The preamble sequence S(-100:100) is generated by a preamble sequence generator according to a control command from a controller, as described above. If it is determined in step 815 that the preamble sequence period is not a leading preamble sequence period in a long preamble sequence period, but a short preamble sequence period (a following part period of the long preamble sequence period), then the transmitter proceeds to step 819.

In step 819, the transmitter maps an even subcarrier's short preamble sequence P(-100:100) to an IFFT processor's input terminal for an antenna #0, maps an odd subcarrier's short preamble sequence Pg(-100:100) to an IFFT processor's input terminal for an antenna #1, and then proceeds to step 821.

In step 821, the transmitter maps an odd subcarrier's short preamble sequence Pg(-100:100) to the IFFT processor's input terminal for the antenna #0, maps an even subcarrier's short preamble sequence P(-100:100) to the IFFT processor's input terminal for the antenna #1 after passage of one OFDM symbol period, and then ends the procedure. In FIG. 8, the even subcarrier's short preamble sequence and the odd subcarrier's short preamble sequence are alternately transmitted via the antenna #0 and the antenna #1. Then a receiver performs accurate channel estimation by receiving the even subcarrier's short preamble sequence and the odd subcarrier's short preamble sequence.

As can be understood from the foregoing description, the present invention proposes an odd subcarrier's short preamble sequence having a low PAPR in an OFDM communication system, thereby improving a characteristic of a preamble sequence. In addition, the present invention transmits an odd subcarrier's short preamble sequence and an even subcarrier's short preamble sequence using one transmission antenna or two transmission antennas, so a receiver can perform correct channel estimation.

While the invention has been shown and described with reference to a certain preferred embodiment thereof, it will be understood by those skilled in the art that various changes in form and details may be made therein without departing from the scope of the invention as defined by the appended claims.

**Claims**

1. A method for transmitting two preamble sequences to decrease a peak-to-average power ratio in an orthogonal frequency division multiplexing communication system having a plurality of subcarriers actually in use and identified by unique numbers in a frequency domain, the method comprising the step of:

   generating a first preamble sequence with elements corresponding to the plurality of subcarriers, wherein data other than null data is inserted for elements whose corresponding subcarrier's unique number is an even number except for the zero, and wherein null data is inserted for elements whose corresponding subcarrier's unique number is an odd number or the zero; and
   **characterized in that** the method further comprises the steps of:

   generating a second preamble sequence with elements corresponding to the plurality of subcarriers, wherein data other than null data is inserted for elements whose corresponding subcarrier's unique number is an odd number, and
   wherein null data is inserted for elements whose corresponding subcarrier's unique number is an even number; and
   generating, according to a predetermined transmission rule, a first and a second time domain preamble sequence by transforming, by using an inverse fast Fourier transform, the first and the second preamble sequences, and
   transmitting the first and second time domain preamble sequences.

2. The method of claim 1, wherein the first and second time domain preamble sequences are transmitted through at least two antennas.

3. The method of claim 2, wherein the first time domain preamble sequence is adapted to be transmitted via one of the two antennas.

4. The method of claim 3, wherein the second time domain preamble sequence is adapted to be transmitted via another one of the two antennas.

5. The method of claim 1, wherein the first time domain preamble sequence is generated for one orthogonal frequency division multiplexing symbol period.

6. The method of claim 5, wherein the second time domain preamble sequence is generated for a next orthogonal frequency division multiplexing symbol period after passage of the one orthogonal frequency division multiplexing symbol period.

7. The method of claim 2, wherein the first time domain preamble sequence is adapted to be transmitted via the first of the two antennas for one orthogonal frequency division multiplexing symbol period and the second of the two antennas for a next orthogonal frequency division multiplexing symbol period after passage of the one orthogonal frequency division multiplexing symbol period.

8. The method of claim 7, wherein the second time domain preamble sequence is adapted to be transmitted via the second of the two antennas for one orthogonal frequency division multiplexing symbol period and the first of the two antennas for the next orthogonal frequency division multiplexing symbol period after passage of the one orthogonal frequency division multiplexing symbol period.

9. The method of one of claims 1 to 8, wherein the second preamble sequence Pg(-100:100) is defined as

$$
\begin{aligned}
Pg(-100{:}100)= \{ & 0,-1, 0,-1, 0,+1, 0,-1, 0,+1, 0,-1, 0,+1, 0,+1, 0,-1, 0,-1, \\
& 0,+1, 0,+1, 0,-1, 0,+1, 0,-1, 0,+1, 0,-1, 0,-1, 0,+1, 0,+1, \\
& 0,+1, 0,+1, 0,-1, 0,+1, 0,-1, 0,+1, 0,-1, 0,-1 ,0,+1, 0,+1, \\
& 0,-1, 0,-1, 0,+1, 0,-1, 0,+1, 0,-1, 0,+1, 0,+1, 0,-1, 0,-1, \\
& 0,-1, 0,-1, 0,+1, 0,+1, 0,+1,0,+1, 0,+1, 0,-1, 0,+1, 0,+1, \\
& 0,-1, \\
& 0,-1, 0,+1, 0,-1, 0,+1, 0,-1, 0,+1, 0,+1, 0,-1, 0,-1, 0,-1, \\
& 0,-1, 0,+1, 0,+1, 0,+1, 0,+1, 0,+1, 0,-1, 0,+1, 0,+1, 0,-1, \\
& 0,-1, 0,+1, 0,+1, 0,+1, 0,+1, 0,+1, 0,-1, 0,+1, 0,+1, 0,-1, \\
& 0,-1, 0,+1, 0,+1, 0,+1, 0,+1, 0,+1, 0,-1, 0,+1, 0,+1, 0,+1, \\
& 0,+1, 0,-1, 0,-1, 0,-1, 0,-1, 0,-1, 0,+1, 0,-1, 0,-1, 0 \} \\
& *sqrt(2)*sqrt(2)
\end{aligned}
$$

10. The method of one of claims 1 to 9, wherein the first preamble sequence P(-100:100) is defined as

$$
\begin{aligned}
P(-100{:}100) = \{ & 1, 0,+1, 0,+1, 0,+1, 0,+1, 0, -1, 0,-1, 0,+1, 0,-1, 0, +1, 0, \\
& -1, 0,-1, 0,+1, 0,+1, 0,-1, 0,+1, 0,-1, 0,+1, 0,-1, 0,+1, 0, \\
& -1, 0,+1, 0,+1, 0,-1, 0,+1, 0,-1, 0,-1, 0,+1, 0,-1, 0,-1, 0, \\
& -1, 0,+1, 0,+1, 0,-1, 0,+1, 0,+1, 0,+1, 0,-1, 0,+1, 0,+1, 0, \\
& -1, 0,-1, 0,-1, 0,+1, 0,+1, 0,+1, 0,+1, 0,+1, 0,+1, 0,+1, 0, \\
& 0, 0, \\
& -1, 0,-1, 0,+1, 0,-1, 0,-1, 0,+1, 0,+1, 0,+1, 0,-1, 0,+1, 0, \\
& +1, 0,+1, 0,-1, 0,-1, 0,-1, 0,-1, 0,-1, 0,-1, 0,+1, 0,-1, 0, \\
& -1, 0,-1, 0,-1, 0,-1, 0,+1, 0,+1, 0,+1, 0,-1, 0,+1, 0, \\
& -1, 0,+1, 0,+1, 0,-1, 0,+1, 0,+1, 0,+1, 0,-1, 0,-1, 0,-1, 0, \\
& -1, 0,-1, 0,+1, 0,-1, 0,-1, 0,+1, 0,-1, 0,-1, 0,+1, 0,-1, \} \\
& *sqrt(2)*sqrt(2)
\end{aligned}
$$

11. An apparatus for transmitting two preamble sequences to decrease a peak-to-average power ratio in an orthogonal frequency division multiplexing communication system having a plurality of subcarriers actually in use and identified by unique numbers in a frequency domain, the apparatus comprising:

preamble sequence generation means for generating a first preamble sequence with elements corresponding to the plurality of subcarriers, wherein data other than null data is inserted for elements whose corresponding subcarrier's unique number is an even number except for the zero, and wherein null data is inserted for elements whose corresponding subcarrier's unique number is an odd number or the zero, **characterized in that** the preamble sequence generation means are further arranged for generating a second preamble sequence with elements corresponding to the plurality of subcarriers, wherein data other than null data is inserted for elements whose corresponding subcarrier's unique number is an odd number and wherein null data is inserted for elements whose corresponding subcarrier's unique number is an even number, and for generating, according to a predetermined transmission rule, a first and a second time domain preamble sequence by transforming, by using an inverse fast Fourier transform, the first and the second preamble sequences, and transmitting the first and second time domain preamble sequences.

12. The apparatus of claim 11, wherein the preamble sequence generation means comprises:

a first antenna's preamble sequence generator for generating the first preamble sequence; and
a second antenna's preamble sequence generator for generating the second preamble sequence.

**Patentansprüche**

1. Verfahren zum Übertragen von zwei Präambelsequenzen zur Reduzierung eines Verhältnis von Spitzenleistung zu mittlerer Leistung (peak-to-average power ratio) in einem orthogonalen Frequenzmultiplex-Kommunikationssystem (orthogonal frequency division multiplexing system), das eine Vielzahl von Hilfsträgern aufweist, die tatsächlich in Gebrauch sind und durch eine eindeutige Zahl in einem Frequenzbereich identifiziert werden, wobei das Verfahren die Schritte umfasst:

Erzeugen einer ersten Präambelsequenz mit der Vielzahl von Hilfsträgern entsprechenden Elementen, worin für Elemente, deren entsprechende eindeutige Hilfsträgemummer eine gerade Zahl außer der Null ist, Daten eingefügt sind, die keine Leerdaten sind, und worin Leerdaten für Elemente eingefügt sind, deren entsprechende eindeutige Hilfsträgerzahl eine ungerade Zahl oder die Null ist; und
**dadurch** charakterisiert, dass das Verfahren weiterhin die Schritte umfasst:

Erzeugen einer zweiten Präambelsequenz mit der Vielzahl von Hilfsträgern entsprechenden Elementen, worin für Elemente, deren entsprechende eindeutige Hilfsträgerzahl eine ungerade Zahl ist, Daten eingefügt sind, die keine Leerdaten sind, und worin Leerdaten für Elemente eingefügt sind, deren entsprechende eindeutige Hilfsträgerzahl eine gerade Zahl ist; und
Erzeugen, entsprechend einer vorbestimmten Übertragungsregel, einer ersten und einer zweiten Zeitbereich-Präambelsequenz durch Umformen der ersten und der zweiten Präambelsequenz unter Verwendung einer inversen schnellen Fourier-Transformation und Übertragen der ersten und der zweiten Zeitbereich-Präambelsequenz.

2. Verfahren nach Anspruch 1, worin die erste und die zweite Zeitbereich-Präambelsequenz über mindestens zwei Antennen übertragen werden.

3. Verfahren nach Anspruch 2, worin die erste Zeitbereich-Präambelsequenz angepasst ist, über eine der zwei Antennen übertragen zu werden.

4. Verfahren nach Anspruch 3, worin die zweite Zeitbereich-Präambelsequenz angepasst ist, über eine andere der zwei Antennen übertragen zu werden.

5. Verfahren nach Anspruch 1, worin die erste Zeitbereich-Präambelsequenz für eine Symbolperiode des orthogonalen Frequenzmultiplex erzeugt wird.

6. Verfahren nach Anspruch 5, worin die zweite Zeitbereich-Präambelsequenz für eine nächste Symbolperiode des orthogonalen Frequenzmultiplex nach Durchgang der einen Symbolperiode des orthogonalen Frequenzmultiplex erzeugt wird.

7. Verfahren nach Anspruch 2, worin die erste Zeitbereich-Präambelsequenz angepasst ist, über die erste der zwei Antennen für eine Symbolperiode des orthogonalen Frequenzmultiplex und über die zweite der zwei Antennen für eine nächste Symbolperiode des orthogonalen Frequenzmultiplex nach Durchgang dieser einen Symbolperiode des orthogonalen Frequenzmultiplex übertragen zu werden.

8. Verfahren nach Anspruch 7, worin die zweite Zeitbereich-Präambelsequenz angepasst ist, über die zweite der zwei Antennen für eine Symbolperiode des orthogonalen Frequenzmultiplex und über die erste der zwei Antennen Frequenzmultiplex für eine nächste Symbolperiode des orthogonalen Frequenzmultiplex nach dem Durchgang der einen Symbolperiode des orthogonalen Frequenzmultiplex übertragen zu werden.

**9.** Verfahren nach einem der Ansprüche 1 bis 8, worin die zweite Präambelsequenz Pg(-100:100) definiert ist als:

$$
\begin{aligned}
Pg(-100:100) = \{ &0,-1, 0,-1, 0,+1, 0,-1, 0,+1, 0,-1, 0,+1, 0,+1, 0,-1, 0,-1, \\
&0,+1, 0,+1, 0,-1, 0,+1, 0,-1, 0,+1, 0,-1, 0,-1, 0,+1, 0,+1, \\
&0,+1, 0,+1, 0,-1, 0,+1, 0,-1, 0,+1, 0,-1, 0,-1, 0,+1, 0,+1, \\
&0,-1, 0,-1, 0,+1, 0,-1, 0,+1, 0,-1, 0,+1, 0,+1, 0,-1, 0,-1, \\
&0,-1, 0,-1, 0,+1, 0,+1, 0,+1, 0,+1, 0,+1, 0,-1, 0,+1, 0,+1, \\
&0,-1, \\
&0,-1, 0,+1, 0,-1, 0,+1, 0,-1, 0,+1, 0,+1, 0,-1, 0,-1, 0,-1, \\
&0,-1, 0,+1, 0,+1, 0,+1, 0,+1, 0,+1, 0,-1, 0,+1, 0,+1, 0,-1, \\
&0,-1, 0,+1, 0,+1, 0,+1, 0,+1, 0,+1, 0,-1, 0,+1, 0,+1, 0,-1, \\
&0,-1, 0,+1, 0,+1, 0,+1, 0,+1, 0,+1, 0,-1, 0,+1, 0,+1, 0,+1, \\
&0,+1, 0,-1, 0,-1, 0,-1, 0,-1, 0,-1, 0,+1, 0,-1, 0,-1, 0 \} \\
&\bullet sqrt(2) \bullet sqrt(2)
\end{aligned}
$$

**10.** Verfahren nach einem der Ansprüche 1 bis 9, worin die erste Präambelsequenz P(-100:100) definiert ist als:

$$
\begin{aligned}
P(-100:100) = \{ &-1, 0,+1, 0,+1, 0,+1, 0,+1, 0,-1, 0,-1, 0,+1, 0,-1, 0,+1, 0, \\
&-1, 0,-1, 0,+1, 0,+1, 0,-1, 0,+1, 0,-1, 0,+1, 0,-1, 0,+1, 0, \\
&-1, 0,+1, 0,+1, 0,-1, 0,+1, 0,-1, 0,-1, 0,+1, 0,-1, 0,-1, 0, \\
&-1, 0,+1, 0,+1, 0,-1, 0,+1, 0,+1, 0,+1, 0,-1, 0,+1, 0,+1, 0, \\
&-1, 0,-1, 0,-1, 0,+1, 0,+1, 0,+1, 0,+1, 0,+1, 0,+1, 0,+1, 0, \\
&0, 0, \\
&-1, 0,-1, 0,+1, 0,-1, 0,-1, 0,+1, 0,+1, 0,+1, 0,-1, 0,+1, 0, \\
&+1, 0,+1, 0,-1, 0,-1, 0,-1, 0,-1, 0,-1, 0,-1, 0,+1, 0,-1, 0, \\
&-1, 0,-1, 0,-1, 0,-1, 0,+1, 0,+1, 0,+1, 0,-1, 0,+1, 0, \\
&-1, 0,+1, 0,+1, 0,-1, 0,+1, 0,+1, 0,+1, 0,-1, 0,-1, 0,-1, 0, \\
&-1, 0,-1, 0,+1, 0,-1, 0,-1, 0,+1, 0,-1, 0,-1, 0,+1, 0,-1 \} \\
&\bullet sqrt(2) \bullet sqrt(2)
\end{aligned}
$$

**11.** Vorrichtung zum Übertragen von zwei Präambelsequenzen zur Reduzierung eines Verhältnisses von Spitzenleistung zu mittlerer Leistung (peak-to-average power ratio) in einem orthogonalen Frequenzmultiplex-Kommunikationssystem (orthogonal frequency division multiplexing communication system), das eine Vielzahl von Hilfsträgern aufweist, die tatsächlich in Gebrauch sind und durch eine eindeutige Zahl in einem Frequenzbereich identifiziert sind, wobei die Vorrichtung umfasst:

Präambelsequenz-Erzeugungsmittel zum Erzeugen einer ersten Präambelsequenz mit der Vielzahl von Hilfsträgern entsprechenden Elementen, worin für Elemente, deren entsprechende eindeutige Hilfsträgerzahl eine gerade Zahl außer der Null ist, Daten eingefügt sind, die keine Leerdaten sind, und worin Leerdaten für Elemente eingefügt sind, deren entsprechende eindeutige Hilfsträgerzahl eine ungerade Zahl oder die Null ist, **dadurch** charakterisiert, dass die Präambelsequenz-Erzeugungsmittel weiter eingerichtet sind, eine zweite Präambelsequenz mit der Vielzahl von Hilfsträgern entsprechenden Elementen zu erzeugen, worin für Elemente, deren entsprechende eindeutige Hilfsträgerzahl eine ungerade Zahl ist, Daten eingefügt sind, die keine Leerdaten sind, und worin Leerdaten für Elemente eingefügt sind, deren entsprechende eindeutige Hilfsträgerzahl eine gerade Zahl ist, und eine erste und eine zweite Zeitbereich-Präambelsequenz entsprechend einer vorbestimmten Übertragungsregel durch Umformen der ersten und der zweiten Präambelsequenz unter Verwendung einer inversen schnellen Fourier-Transformation zu erzeugen und die erste und die zweite Zeitbereich-Präambel-Sequenz zu übertragen.

**12.** Vorrichtung nach Anspruch 11, worin die Präambelsequenz-Erzeugungsmittel umfassen:

einen Präambelsequenz-Erzeuger einer ersten Antenne zum Erzeugen der ersten Präambelsequenz; und
einen Präambelsequenz-Erzeuger einer zweiten Antenne zum Erzeugen der zweiten Präambelsequenz.

**Revendications**

1.  Procédé d'émission de deux séquences de préambule pour diminuer un rapport de puissance de crête sur puissance moyenne dans un système de communication à multiplexage orthogonal par répartition de fréquence comportant une pluralité de sous-porteuses réellement en utilisation et identifiées par des numéros uniques dans un domaine fréquentiel, le procédé comprenant l'étape :

    de génération d'une première séquence de préambule avec des éléments correspondant à la pluralité de sous-porteuses, dans lequel des données autres que des données nulles sont insérées pour des éléments dont le numéro unique correspondant de sous-porteuse est un numéro pair excepté pour le zéro, et dans lequel des données nulles sont insérées pour des éléments dont le numéro unique correspondant de sous-porteuse est un numéro impair ou le zéro ; et
    **caractérisé en ce que** le procédé comprend en outre les étapes :

    de génération d'une seconde séquence de préambule avec des éléments correspondant à la pluralité de sous-porteuses, dans lequel des données autres que des données nulles sont insérées pour des éléments dont le numéro unique correspondant de sous-porteuse est un numéro impair, et dans lequel des données nulles sont insérées pour des éléments dont le numéro unique correspondant de sous-porteuse est un numéro pair ; et
    de génération, selon une règle prédéterminée d'émission, d'une première et d'une seconde séquence de préambule dans le domaine temporel par transformation, en utilisant une transformation de Fourier rapide inverse, de la première et de la seconde séquence de préambule, et d'émission des première et seconde séquences de préambule dans le domaine temporel.

2.  Procédé selon la revendication 1, dans lequel les première et seconde séquences de préambule dans le domaine temporel sont émises par l'intermédiaire d'au moins deux antennes.

3.  Procédé selon la revendication 2, dans lequel la première séquence de préambule dans le domaine temporel est apte à être émise via l'une des deux antennes.

4.  Procédé selon la revendication 3, dans lequel la seconde séquence de préambule dans le domaine temporel est apte à être émise via une autre des deux antennes.

5.  Procédé selon la revendication 1, dans lequel la première séquence de préambule dans le domaine temporel est engendrée pour une période de symbole de multiplexage orthogonal par répartition de fréquence.

6.  Procédé selon la revendication 5, dans lequel la seconde séquence de préambule dans le domaine temporel est engendrée pour une période suivante de symbole de multiplexage orthogonal par répartition de fréquence après l'écoulement de ladite une période de symbole de multiplexage orthogonal par répartition de fréquence.

7.  Procédé selon la revendication 2, dans lequel la première séquence de préambule dans le domaine temporel est apte à être émise via la première des deux antennes pour une période de symbole de multiplexage orthogonal par répartition de fréquence et par la seconde des deux antennes pour une période suivante de symbole de multiplexage orthogonal par répartition de fréquence après l'écoulement de ladite une période de symbole de multiplexage orthogonal par répartition de fréquence.

8.  Procédé selon la revendication 7, dans lequel la seconde séquence de préambule dans le domaine temporel est apte à être émise via la seconde des deux antennes pour une période de symbole de multiplexage orthogonal par répartition de fréquence et par la première des deux antennes pour la période suivante de symbole de multiplexage orthogonal par répartition de fréquence après l'écoulement de ladite une période de symbole de multiplexage orthogonal par répartition de fréquence.

9.  Procédé selon l'une des revendications 1 à 8, dans lequel la seconde séquence de préambule Pg(-100:100) est définie comme :

$$Pg(-100{:}100) = \{0,-1, 0,-1, 0,+1, 0,-1, 0,+1, 0,-1, 0,+1, 0,+1, 0,-1, 0,-1,$$
$$0,+1, 0,+1, 0,-1, 0,+1, 0,-1, 0,+1, 0,-1, 0,-1, 0,+1, 0,+1,$$
$$0,+1, 0,+1, 0,-1, 0,+1, 0,-1, 0,+1, 0,-1, 0,-1, 0,+1, 0,+1,$$
$$0,-1, 0,-1, 0,+1, 0,-1, 0,+1, 0,-1, 0,+1, 0,+1, 0,-1, 0,-1,$$
$$0,-1, 0,-1, 0,+1, 0,+1, 0,+1, 0,+1, 0,+1, 0,-1, 0,+1, 0,+1,$$
$$0,-1,$$
$$0,-1, 0,+1, 0,-1, 0,+1, 0,-1, 0,+1, 0,+1, 0,-1, 0,-1, 0,-1,$$
$$0,-1, 0,+1, 0,+1, 0,+1, 0,+1, 0,+1, 0,-1, 0,+1, 0,+1, 0,-1,$$
$$0,-1, 0,+1, 0,+1, 0,+1, 0,+1, 0,+1, 0,-1, 0,+1, 0,+1, 0,-1,$$
$$0,-1, 0,+1, 0,+1, 0,+1, 0,+1, 0,+1, 0,-1, 0,+1, 0,+1, 0,+1,$$
$$0,+1, 0,-1, 0,-1, 0,-1, 0,-1, 0,-1, 0,+1, 0,-1, 0,-1, 0\}$$
$$*\sqrt{2}*\sqrt{2}.$$

**10.** Procédé selon l'une des revendications 1 à 9, dans lequel la première séquence de préambule Pg(-100:100) est définie comme :

$$Pg(-100{:}100) = \{1, 0,+1, 0,+1, 0,+1, 0,+1, 0,-1, 0,-1, 0,+1, 0,-1, 0,+1, 0,$$
$$-1, 0,-1, 0,+1, 0,+1, 0,-1, 0,+1, 0,-1, 0,+1, 0,-1, 0,+1, 0,$$
$$-1, 0,+1, 0,+1, 0,-1, 0,+1, 0,-1, 0,-1, 0,+1, 0,-1, 0,-1, 0,$$
$$-1, 0,+1, 0,+1, 0,-1, 0,+1, 0,+1, 0,+1, 0,-1, 0,+1, 0,+1, 0,$$
$$-1, 0,-1, 0,-1, 0,+1, 0,+1, 0,+1, 0,+1, 0,+1, 0,+1, 0,+1, 0,$$
$$0, 0,$$
$$-1, 0,-1, 0,+1, 0,-1, 0,-1, 0,+1, 0,+1, 0,+1, 0,-1, 0,+1, 0,$$
$$+1, 0,+1, 0,-1, 0,-1, 0,-1, 0,-1, 0,-1, 0,-1, 0,+1, 0,-1, 0,$$
$$-1, 0,-1, 0,-1, 0,-1, 0,-1, 0,+1, 0,+1, 0,+1, 0,-1, 0,+1, 0,$$
$$-1, 0,+1, 0,+1, 0,-1, 0,+1, 0,+1, 0,+1, 0,-1, 0,-1, 0,-1, 0,$$
$$-1, 0,-1, 0,+1, 0,-1, 0,-1, 0,+1, 0,-1, 0,-1, 0,+1, 0,-1\}$$
$$*\sqrt{2}*\sqrt{2}.$$

**11.** Appareil destiné à émettre deux séquences de préambule pour diminuer un rapport de puissance de crête sur puissance dans un système de communication à multiplexage orthogonal par répartition de fréquence comportant une pluralité de sous-porteuses réellement en utilisation et identifiées par des numéros uniques dans un domaine fréquentiel, l'appareil comprenant :

des moyens générateurs de séquences de préambule destinés à engendrer une première séquence de préambule avec des éléments correspondant à la pluralité de sous-porteuses, dans lequel des données autres que des données nulles sont insérées pour des éléments dont le numéro unique correspondant de sous-porteuse est un numéro pair excepté pour le zéro, et dans lequel des données nulles sont insérées pour des éléments dont le numéro unique correspondant de sous-porteuse est un numéro impair ou le zéro ;
**caractérisé en ce que** les moyens générateurs de séquences de préambule sont en outre agencés pour engendrer une seconde séquence de préambule avec des éléments correspondant à la pluralité de sous-porteuses, dans lequel des données autres que des données nulles sont insérées pour des éléments dont le numéro unique correspondant de sous-porteuse est un numéro impair, et dans lequel des données nulles sont insérées pour des éléments dont le numéro unique correspondant de sous-porteuse est un numéro pair ; et pour engendrer, selon une règle prédéterminée d'émission, une première et une seconde séquence de préambule dans le domaine temporel par transformation, en utilisant une transformation de Fourier rapide inverse, de la première et de la seconde séquence de préambule, et pour émettre les première et seconde séquences de préambule dans le domaine temporel.

12. Appareil selon la revendication 11, dans lequel le moyen générateur de séquences de préambule comprend :

un générateur de séquence de préambule de première antenne destiné à engendrer la première séquence de préambule ; et
un générateur de séquence de préambule de seconde antenne destiné à engendrer la seconde séquence de préambule.

| CP | 64 | 64 | 64 | 64 | CP | 128 | 128 |

## FIG.1

| CP | 128 | 128 |

## FIG.2

0 — 0
1
2
⋮

S(-100:100)
OR
P(-100:100)

99
100
ALL NULL { 101
⋮
127
-128
ALL NULL { ⋮
-101
-100
-99
⋮

IFFT
PROCESSOR

FIG.3

-2
-1

FIG.4

EP 1 424 789 B1

FIG.5

```
                        ┌──────────┐
                        │  START   │
                        └────┬─────┘
                             │
                             ▼                    611
            NO      ╱──────────────────╲    YES
      ┌─────────────│    PREAMBLE       │──────────────┐
      │             │ SEQUENCE PERIOD?  │              │
      │             ╲──────────────────╱               │
      │                                                ▼
      │                                                           615
      │            YES    ╱──────────────────────╲
      │      ┌────────────│      LEADING          │
      │      │            │  PREAMBLE SEQUENCE     │
      │      │            │      PERIOD?           │
      │      │            ╲──────────────────────╱
      │      │                      │ NO    619
      │      ▼  617                 ▼
      │  ┌──────────────┐      ┌──────────────────┐
      │  │INSERT         │      │INSERT SHORT       │
      │  │S(-100:100)    │      │PREAMBLE           │
      │  │INTO BOTH IFFT │      │SEQUENCE P(-100:100)│
      │  │PROCESSORS'    │      │OF EVEN SUBCARRIER │
      │  │INPUT TERMINALS│      │INTO IFFT          │
      │  └──────┬───────┘      │PROCESSOR'S        │
      │         │              │INPUT TERMINAL     │
      │  613    │              └────────┬─────────┘
      ▼         │                       │ 621
 ┌──────────┐  │                       ▼
 │INSERT DATA│ │              ┌──────────────────┐
 │INTO BOTH  │ │              │INSERT SHORT       │
 │IFFT       │ │              │PREAMBLE           │
 │PROCESSORS'│ │              │SEQUENCE Pg(-100:100)│
 │INPUT      │ │              │OF ODD SUBCARRIER  │
 │TERMINALS  │ │              │INTO IFFT          │
 └─────┬────┘ │              │PROCESSOR'S INPUT  │
       │      │              │TERMINAL AFTER     │
       │      │              │PASSAGE OF ONE     │
       │      │              │OFDM SYMBOL PERIOD │
       │      │              └────────┬─────────┘
       │      ▼                       │
       │   ┌──────┐                   │
       └──▶│ END  │◀──────────────────┘
           └──────┘
```

FIG.6

START

711
PREAMBLE
SEQUENCE PERIOD?

NO
YES

715
LEADING
PREAMBLE SEQUENCE
PERIOD?

YES

717
INSERT S(-100:100) INTO
BOTH IFFT PROCESSORS'
INPUT TERMINALS OR
ONE IFFT PROCESSOR'S
INPUT TERMINAL

NO
719
INSERT SHORT PREAMBLE
SEQUENCE P(-100:100) OF
EVEN SUBCARRIER INTO
IFFT PROCESSOR'S INPUT
TERMINAL FOR ANTENNA
#0, AND INSERT SHORT
PREAMBLE SEQUENCE
Pg(-100:100) OF ODD
SUBCARRIER INTO IFFT
PROCESSOR'S INPUT
TERMINAL FOR ANTENNA #1

713
INSERT DATA INTO
BOTH IFFT PROCESSORS'
INPUT TERMINALS

END

FIG.7

START

811
PREAMBLE
SEQUENCE PERIOD?

NO ← → YES

815
LEADING
PREAMBLE SEQUENCE
PERIOD?

YES ← → NO

817
INSERT S(-100:100) INTO
BOTH IFFT PROCESSORS'
INPUT TERMINALS OR
ONE IFFT PROCESSOR'S
INPUT TERMINAL

819
INSERT P(-100:100) INTO
IFFT PROCESSOR'S INPUT
TERMINAL FOR ANTENNA #0
AND Pg(-100:100) INTO IFFT
PROCESSOR'S INPUT TERMINAL
FOR ANTENNA #1

813
INSERT DATA INTO
BOTH IFFT PROCESSORS'
INPUT TERMINALS

821
INSERT Pg(-100:100) INTO
IFFT PROCESSOR'S INPUT
TERMINAL FOR ANTENNA #0
AND P(-100:100) INTO IFFT
PROCESSOR'S INPUT TERMINAL
FOR ANTENNA #1
AFTER PASSAGE OF ONE
OFDM SYMBOL PERIOD

END

FIG.8

1. S(-100:100) IS INSERTED INTO
   BOTH IFFT PROCESSORS' INPUT
   TERMINALS OR ONE IFFT
   PROCESSOR'S INPUT
   TERMINAL FOR LEADING
   PREAMBLE SEQUENCE PERIOD
   IN LONG PREAMBLE
   SEQUENCE PERIOD

2. P(-100:100) IS SHORT
   PREAMBLE SEQUENCE
   OF EVEN SUBCARRIER
   AND IS INSERTED INTO
   IFFT PROCESSOR'S INPUT
   TERMINAL

3. Pg(-100:100) IS SHORT
   PREAMBLE SEQUENCE OF
   ODD SUBCARRIER AND IS
   INSERTED INTO IFFT
   PROCESSOR'S INPUT TERMINAL

ALL NULL

ALL NULL

0
1
.
.
.
.
.
.
.
.
99
100
101
.
127
-128
.
-101
-100
-99
.
.
.
.
.
.
.
.
.
-2
-1

0

IFFT
PROCESSOR

FIG.9

1. S(-100:100) IS INSERTED INTO BOTH IFFT PROCESSORS' INPUT TERMINALS OR ONE IFFT PROCESSOR'S INPUT TERMINAL FOR LEADING PREAMBLE SEQUENCE PERIOD IN LONG PREAMBLE SEQUENCE PERIOD

2. P(-100:100) IS SHORT PREAMBLE SEQUENCE OF EVEN SUBCARRIER AND IS INSERTED INTO IFFT PROCESSOR'S INPUT TERMINAL FOR ANTENNA #0 OR ANTENNA #1

3. Pg(-100:100) IS SHORT PREAMBLE SEQUENCE OF ODD SUBCARRIER AND IS INSERTED INTO IFFT PROCESSOR'S INPUT TERMINAL FOR ANTENNA #1 OR ANTENNA #0

ALL NULL

ALL NULL

IFFT PROCESSOR

0
1
:
99
100
101
:
127
-128
:
-101
-100
-99
:
-2
-1

# FIG.10

**EP 1 424 789 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2002041635 A